# EUROPÄISCHE PATENTSCHRIFT

(11) **EP 0 444 036 B1**
(45) Veröffentlichungstag und Bekanntmachung des Hinweises auf die Patenterteilung: **18.08.1993**
(21) Anmeldenummer: 89907123.7
(22) Anmeldetag: 13.06.1989
(51) Int. Cl.: A45D 34/04, G01F 11/02

(54) **AUFTRAGSTIFT FÜR FLÜSSIGKEITEN**
APPLICATOR PEN FOR LIQUIDS
STYLO APPLICATEUR DE LIQUIDES

(30) Priorität: 16.06.1988 DE 3820450
(43) Veröffentlichungstag der Anmeldung: 04.09.1991
(73) Patentinhaber: GEORG KARL GEKA-BRUSH GMBH, D-91572 Bechhofen (DE)
(72) Erfinder: KATZ, Otto, D-8540 Schwabach (DE)
(74) Vertreter: Rau, Manfred, Dr. Dipl.-Ing.
(86) Internationale Anmeldenummer: EP8900665
(87) Internationale Veröffentlichungsnummer: WO8912411

(56) Entgegenhaltungen:
- WO-A-87/00404
- DE-C- 3 629 627

## Beschreibung

Die Erfindung betrifft einen Auftragstift für Flüssigkeiten nach dem Oberbegriff des Anspruchs 1.

Der Auftragstift für Flüssigkeiten enthält ein Auftragelement in der Art eines Pinsels oder Dochtes, welches in Ruhestellung in der Bohrung eines Mundstückes versenkt ist und durch ein Betätigungselement, gegen die Wirkung einer Druckfeder, in Gebrauchsstellung geschaltet werden kann. Bei der Betätigung wird das Auftragelement mit Flüssigkeit aus dem Vorratsraum in dosierter Weise benetzt. Nach Gebrauch, bzw. nach Lösen des Betätigungselementes erfolgt eine Rückstellung des Auftragelementes in die Ausgangslage, wodurch das Auftragelement vor rascher Eintrocknung und Beschädigung geschützt wird.

Eine stiftförmige Vorrichtung ist nach der DE PS 36 29 627 bekannt, die ähnlich wie in der vorliegenden Erfindung, ein pinselförmiges Auftragelement aus einem Vorratsraum in dosierter Weise mit Flüssigkeit versorgt, wenn über ein Betätigungselement der Pinsel in Gebrauchsstellung gebracht wird.
Der Aufbau des Dosiersystems und dessen Funktion unterscheidet sich jedoch von der Erfindung.
Bei der bekannten Ausführung erfolgt der Dosiervorgang aus dem Zusammenwirken eines mit der Kolbenstange fest verbundenem Steuerkolben und einem elastisch gekoppelten Dosierkolben, der auf der Kolbenstange axial beweglich ist. Nachdem der Steuerkolben nach Beginn seiner Längsbewegung die zugeordnete Dichtung verlassen hat, ist der, unter der Vorspannung einer Dosierfeder stehende Dosierkolben in der Lage, sich in den Dichtzylinder hineinzubewegen und Flüssigkeit zu verdrängen.

Die elastische Kopplung mittels der Dosierfeder hat den Nachteil, daß die Dosierung, d.h. die Bewegung des Dosierkolbens, von der Reibung der Dosierkolbendichtung im Dichtzylinder abhängig ist. Bei erhöhter Reibung bleibt der Dosierkolben während der Betätigung zunächst so lange stehen, bis die Dosierfeder eine Vorspannung erreicht hat, welche die statische Reibung des Dosierkolbens überwindet. Diese sich aufstauende Vorspannung hat zur Folge, daß der Dosierkolben sprunghaft in gleitende Reibung versetzt wird. Dadurch wird die in der Dosierkammer befindliche Dosiermenge stoßförmig und unkontrolliert aus der Dosierkammer verdrängt.
Die Flüssigkeit tritt in unerwünschter Weise aus dem Mundstück aus. Dadurch ist eine gleichmäßige Benetzung des Auftragelementes nicht erfolgt und eine brauchbare Applikation nicht möglich.
Eine ebenso nachteilige Wirkung entsteht, wenn bei der bekannten Ausführung die Reibung zwischen Dosierkolben und Kolbenstange zu groß ist. In diesem Fall erfolgt die Mitnahme des Dosierkolbens mit der Geschwindigkeit der Betätigung, sodaß bei schneller Betätigung ein Dosierimpuls erfolgt, der ebenfalls zu einem unkontrollierten Ausstoß von Flüssigkeitspartikeln führt.
Nachteilig ist weiterhin, daß durch eine erhöhte Reibung zwischen Dosierkolben und Kolbenstange, die Betätigung schwergängig wird und die Rückholfeder nicht in der Lage ist, die Kolbenstange mit dem Dosierkolben in die Ausgangslage zu fahren. Dadurch verbleibt der Dosierkolben im Dichtzylinder, wodurch die Dosierkammer für den nächsten Dosierzyklus nicht gefüllt werden kann, sodaß keine Applikation möglich ist.
Bei der bekannten Ausführung ist es im Vergleich zur Erfindung insgesamt nachteilig, daß eine erhöhte Teilezahl mit sehr engen Toleranzen gefertigt werden muß, um eine brauchbare Applikation zu erzielen.

Der Erfindung liegt die Aufgabe zugrunde, einen Auftragstift für Flüssigkeiten in der Weise zu konzipieren, daß die Dosierung zuverlässig, frei von Druckstößen und mit geringen Betätigungskräften erfolgt und daß mit wenigen, einfach gestalteten und leicht montierbaren Teilen, eine wirtschaftliche Lösung erzielbar ist.

Zur Lösung dieser Aufgabe wird ein Auftragstift für Flüssigkeiten der vorbeschriebenen Art nach den kennzeichnenden Merkmalen des Anspruchs 1 ausgestaltet.

Weitere Merkmale der Erfindung sind in den Ansprüchen 2 - 7 dargelegt.

Ein Stufenkolben, der aus einem Vor-und einem Nachkolben besteht, wobei der Nachkolben den größeren Durchmesser aufweist, wirkt mit zwei Dichtungen zusammen, die an den Stirnseiten einer Dosierkammer angeordnet sind.
Dadurch ergibt sich mit einem Minimum an beweglichen und abzudichtenden Teilen eine Dosierfunktion. Diese resultiert aus dem Durchmesserunterschied von Vor-und Nachkolben und einem Dosierhub.
Dabei ist weiterhin vorteilhaft, daß durch das größere Abstandsmaß der Dichtlippen zum Abstand der an Vor-und Nachkolben befindlichen Steuerkanten, bei der Hub-Bewegung eine Überschneidung entsteht. Dadurch wird auf einfache Weise erreicht, daß der Vorkolben die zugeordnete Dichtlippe erst dann verläßt, wenn der Nachkolben bereits mit seiner Steuerkante von seiner zugeordneten Dichtlippe erfaßt ist. Dadurch wird die Sicherheit gegen unbeabsichtigten Verlust von Füllgut erhöht, wenn im Vorratsraum ein höherer Druck, beispielsweise durch Temperatursteigerung, vorliegt.
Nach einer vorteilhaften Ausgestaltung ist die Verbindung zwischen Vor-und Nachkolben im Durchmesser kleiner gehalten als die des Vorkolbens. Dadurch öffnen oder schließen die Dichtlippen den Flüssigkeitsdurchlauf definiert an den Steuerkanten von Vor-und Nachkolben.

Dabei ist es vorteilhaft, die Verbindung zwischen dem Vor-und Nachkolben in zwei konische Abschnitte aufzuteilen. Besondere Bedeutung erhält hierbei der an den Vorkolben sich anschließende Konus, da dessen Konizität einen sich langsam öffnenden Durchflußquerschnitt erzeugt, wenn die Steuerkante des Vorkolbens beim Vorwärtshub die zugehörige Dichtung durchlaufen hat.
Dadurch wird eine gedämpfte Entspannung der in der Dosierkammer unter Druck befindlichen Flüssigkeit erreicht. Deshalb ist es zweckmäßig, die an den Vorkolben anschließende Konizität besonders lang und mit kleinem Kegelwinkel auszubilden. Der Ringspalt,der sich aus der Lippendichtung und dem konischen Abschnitt bildet, vergrößert sich auf diese Weise nur langsam ansteigend.
Bei der geometrischen Gestaltung der Dichtungen ist es zweckmäßig, daß deren Dichtlippen in axialer Richtung konisch verlaufen und daß sie sich zum Vorratsraum hin, verjüngen. Dadurch wird vorteilhafterweise erreicht, daß die Dichtungen bei Überdruck im Vorratsraum, ihren Anpreßdruck auf Vor-und Nachkolben verstärken, wodurch deren Dichtwirkung erhöht wird. Wenn umgekehrt durch Abgabe von Flüssigkeitsvolumen ein Unterdruck im Vorratsraum entsteht, so wird der für die Dosierfunktion erforderliche Luftausgleich durch die Atmungsfunktion der Dichtlippen unterstützt.
Weiterhin ist es von Vorteil, daß am Ende des Nachkolbens eine Stauscheibe befestigt ist, welche gleichzeitig zur Abstützung der Druckfeder dient und vorteilhafterweise an der Innenwandung des Gehäuses geführt ist, damit die Stauscheibe an ihrem Umfang nur wenig umströmt wird, um eine definierte Flüssigkeitsströmung in ihren Durchlässen zu erreichen.
Dadurch ist ein bestimmter Staudruck erzielbar, welcher beim Vorwärtshub die Füllung der Dosierkammer unterstützt, während der beim Rückhub entstehende Sog, den Luftausgleich im Vorratsraum begünstigt.
Ein weiterer Vorteil einer Führung der Stauscheibe an der Innenwandung des Gehäuses wird darin gesehen, daß die Knickneigung des langen Stangengebildes verringert wird, welches sich aus der Aneinander-Reihung von Vor-u. Nachkolben, Schaft und Betätigungsstange addiert.
Weiterhin ist es vorteilhaft, bei der Gestaltung der Betätigungsstange deren Durchmesser gegenüber dem Nachkolben so weit zu verringern, damit dieser gerade noch der Knickfestigkeit genügt. Dadurch wird erreicht, daß der Nachkolben innerhalb des Vorratsraumes mit der Betätigungsstange in umgekehrter Orientierung einen zweiten, sehr wirksamen Stufenkolben bildet. Dies führt dazu, daß beim Betätigungshub ein Unterdruck durch Volumenabgabe und ein zusätzlicher Unterdruck durch den Stufenkolben erzeugt wird. Dadurch wird die Atmungsfunktion der dem Nachkolben zugeordneten Lippendichtung unterstützt, welche den Luftausgleich zum Vorratsraum steuert.
Es ist aus einem weiteren Grund zweckmäßig, den Durchmesser der Betätigungsstange klein zu halten. Damit wird erreicht, daß die zur Abdichtung der Betätigungsstange gegenüber dem Vorratsraum erforderliche Dichtung miniaturisiert werden kann, um Dichtverluste zu vermeiden.
Dabei ist es von Vorteil, die Betätigungsstange in metallischem Werkstoff auszuführen, um bei kleinem Durchmesser eine hohe Knickfestigkeit zu erreichen und um durch eine glatte Oberfläche, niedrige Reibungswerte zu erzielen.

Ein Ausführungsbeispiel der Erfindung ist in der Zeichnung dargestellt und wird im folgenden näher beschrieben.

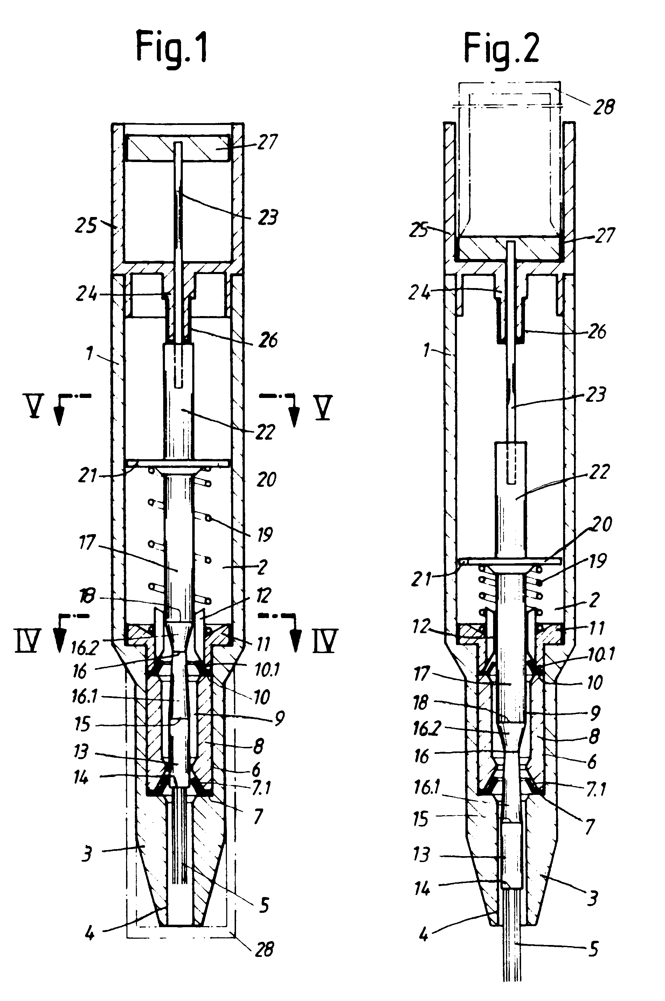

Es zeigen
- Fig. 1: einen Längsschnitt durch den unbetätigten Auftragstift
- Fig. 2: einen Längsschnitt durch den betätigten Auftragstift
- Fig. 3: 4 Betätigungspositionen a bis d
- Fig. 4: einen Querschnitt IV-IV durch den unbetätigten Auftragstift
- Fig. 5: einen Querschnitt V-V durch den unbetätigten Auftragstift
Der Aufbau des Auftragstiftes für Flüssigkeiten ist folgender:
In einem Gehäuse 1 befindet sich ein Vorratsraum 2 zur Aufnahme der nicht dargestellten aufzutragenden Flüssigkeit. Das Gehäuse 1 ist mit einem Mundstück 3 verbunden, welches eine Bohrung 4 zur Aufnahme des längsbeweglichen Auftragelementes 5 aufweist. Die an die Bohrung 4 anschließende Bohrung 6 enthält eine Dichtung 7, eine Buchse 8 und daran anschließend eine Dichtung 10. Die Dichtungen 7 und 10 sind mit Dichtlippen 7.1 und 10.1 versehen. Die Buchse 8 dient zur Distanzierung der Dichtungen 7 und 10 und bildet an ihrem Innendurchmesser eine Dosierkammer 9. Im Vergleich zur Dichtung 7 weist die Dichtung 10 einen vergrößerten Innendurchmesser auf. Mit einer Flanschbuchse 11, die mittels einer Druckfeder 19 im Gehäuse 1 anliegt, sind gemeinsam die Dichtungen 7 und 10, sowie die Buchse 8 axial fixiert.
Die Flanschbuchse 11 enthält Längskanäle 12, welche zum Durchtritt der Flüssigkeit vom Vorratsraum 2 in die Dosierkammer 9 dienen.
Der Stufenkolben besteht aus einem Vorkolben 13 und einem Nachkolben 17. Beide sind über konische Abschnitte 16.1 und 16.2, welche die Verbindung 16 bilden, verbunden. Der Vorkolben 13 weist den kleineren Durchmesser auf und erstreckt sich von einer Stirnkante 14 bis zu einer Steuerkante 15 und wird in diesem Bereich von der Dichtung 7 erfaßt. Der Nachkolben 17 ist am Innendurchmesser der Längskanäle 12 gefuhrt und zentriert, und erstreckt sich von der Steuerkante 18 bis zu einer Stauscheibe 20. Unter der Wirkung der Druckfeder 19 nimmt der aus dem Vorkolben 13 und dem Nachkolben 17 gebildete Stufenkolben die in Fig.1 dargestellte Position ein. Die Druckfeder 19 stützt sich dabei einerseits an der Flanschbuchse 11, andererseits an der Stauscheibe 20 ab, wobei die Ausgangslage in axialer Richtung durch Anlage eines Schaftes 22 an der Stirnseite der Dichtung 26 bestimmt ist.
Die Stauscheibe 20 ist mit dem Nachkolben 17 fest verbunden, führt sich an der Innenwandung des Gehäuses 1 und weist Durchlässe 21 auf. Bei der Längsbewegung bewirken diese einen gedrosselten Durchfluß der Flüssigkeit und erzeugen zwischen der Dosierkammer 9 und der Stauscheibe 20 einen Staudruck.
An die Stauscheibe 20 schließt sich der Schaft 22 an, welcher sowohl mit dem Vorkolben 13, dem Nachkolben 17, sowie mit der Betätigungsstange 23 fest verbunden ist.
Letztere ist längsbeweglich in einem Lager 24 und in einer Dichtung 26 geführt. Diese ist mit der Stirnseite des Lagers 24 verbunden und dichtet den Vorratsraum 2 zur Betätigungsseite hin, ab. Das Lager 24 ist an eine Abschlußbuchse 25 angeformt, welche mit dem Gehäuse 1 dicht verbunden ist und zugleich ein Betätigungselement 27 aufnimmt. Dieses ist mit der Betätigungsstange 23 verbunden, welche aus einem metallischen Werkstoff besteht. Dadurch wird ein kleinstmöglicher Durchmesser erreicht, um Reibungs-u. Abdichtverluste minimal zu halten.
In bekannter Weise wird der Auftragstift mittels einer Kappe 28 verschlossen. Diese ist gemäß Fig.2 auf das Betätigungselement 27 umsteckbar.

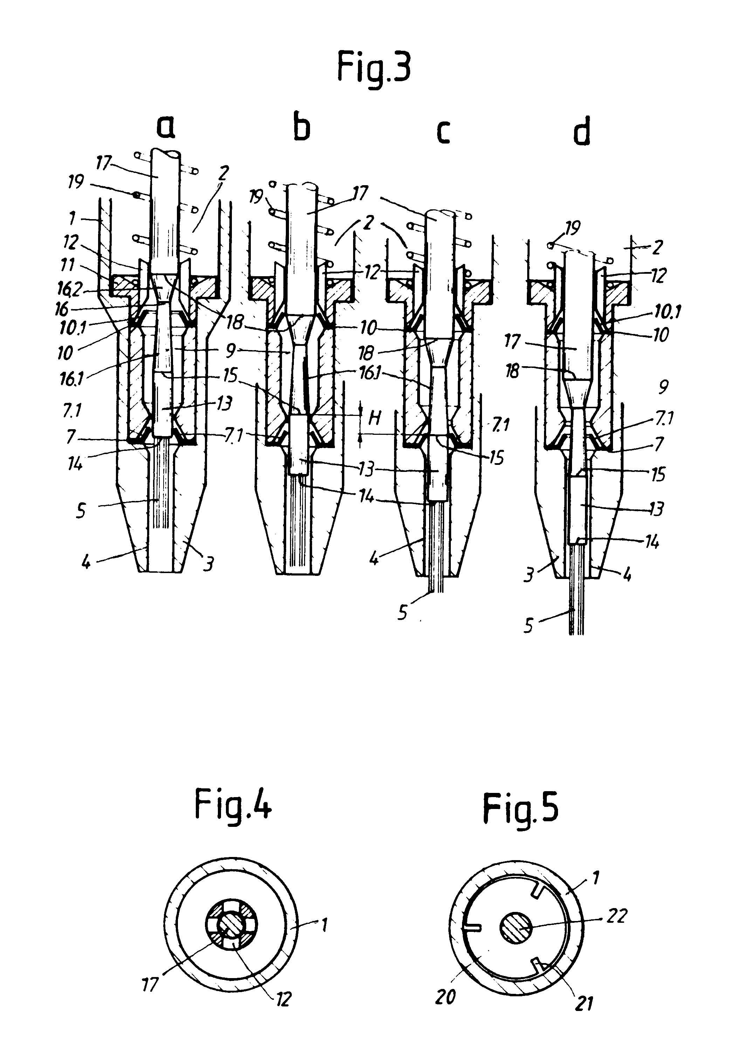

Nachfolgend wird die Wirkungsweise beschrieben.
Die Bedienung des Auftragstiftes für Flüssigkeiten erfolgt auf einfache Weise dadurch, daß das federbelastete Betätigungselement 27 mittels der umsteckbaren Kappe 28 niedergedrückt und das Auftragelement 5 in Gebrauchstellung gebracht wird. (Fig.2) Dabei bleibt die Kappe 28 so lange betätigt, bis die Applikation erfolgt ist. Bei Entlastung des Betätigungselementes 27 bewegt sich das Auftragelement in Ausgangsstellung (Fig.1) Mit dem Niederdrücken des Betätigungselementes 27 gegen die Federkraft in Richtung Mundstück 3 wird gleichzeitig ein Dosiervorgang ausgelöst, der mit jedem Betätigungshub das Auftragelement 5 benetzt.
Zum besseren Verständnis der Funktion ist sowohl die durch die Betätigung erfolgende Längsbewegung in Gebrauchsstellung, als auch die beim Lösen des Betätigungselementes erfolgende Rückbewegung in die Ausgangslage in einzelne Phasen unterteilt. Fig. 3 a-d)

### Phase a-b:

Es wird vorausgesetzt, daß der Vorratsraum 2, die Dosierkammer 9 und der Ringraum, gebildet aus Bohrung 4 und Auftragelement 5 bzw. Vorkolben 13, bereits mit Flüssiqkeit gefüllt sind.
Bei der Längsbewegung von Vorkolben 13 und damit verbundenem Nachkolben 17 von Pos.a nach Pos.b, steht die Dosierkammer 9 mit dem Vorratsraum 2 so lange in Verbindung, bis die Steuerkante 18 die Dichtlippe 10.1 tangiert. Dabei liegt die Dichtlippe 7.1 ständig am Vorkolben 13 an. Die im Ringraum zwischen Bohrung 4 und Auftragelement 5 befindliche Flüssigkeit, bewegt sich durch die Verdrängung des Vorkolbens 13 zeitgleich mit dem Auftragelement nach vorn und hält dieses benetzt.
Die mit dem Nachkolben 17 verbundene Stauscheibe 20 bewirkt bei der Bewegung in Richtung Mundstück 3 einen Staudruck, der die Füllung der Dosierkammer 9 fördert.

### Phase b-c:

In der Pos.b ist die Verbindung zwischen Vorratsraum 2 und Dosierkammer 9 durch die Steuerkante 18 und die Dichtlippe 10.1 getrennt. Sowohl der Vorkolben 13 als auch der Nachkolben 17 liegen gleichzeitig an ihren zugeordneten Dichtlippen 7.1 und 10.1 an. Bei der Weiterbewegung von Vor-u.Nachkolben 13 und 17 in Richtung Mundstück 3 bzw. zur Pos.c,baut sich infolge der Durchmesserdifferenz zwischen Vorkolben 13 und Nachkolben 17 und dem Dosierhub H ein Druck in der allseitig abgeschlossenen und gefüllten Dosierkammer 9 auf. Da die Flüssigkeit nicht kompressibel ist, überträgt sich die Drucksteigerung an die in der Flüssigkeit enthaltenen Gasbläschen und an die flexiblen Dichtungen 7 und 10.
Die Benetzung des Auftragelements 5 bleibt zunächst unverändert.

### Phase c-d:

Bei der Weiterbewegung von Vorkolben 13 und Nachkolben 17 über den Dosierhub H hinaus, verläßt die Steuerkante 15 die Dichtlippe 7.1. Dabei bildet sich zwischen der Dichtlippe 7.1 und dem konischen Abschnitt 16.1 ein sich zunehmend vergrößernder ringförmiger Durchlaß, durch welchen sich der in der Dosierkammer 9 vorhandene Überdruck in einer gedrosselten Flüssigkeitsströmung abbaut.
Diese Flüssigkeitsmenge, die sich aus der Durchmesserdifferenz von Vor-u.Nachkolben 13 und 17 und dem Dosierhub H ergibt, stellt das eigentliche Dosiervolumen dar.
Ein weiterer Flüssigkeitsschub ergibt sich aus der fortschreitenden Verdrängung des Nachkolbens 17, der sein eigenes, aus der Dichtung 10 austretendes Volumen bis zum Hub-Ende in der Pos.d,verdrängt.Dieses Volumen wird jedoch beim Rücklauf von Pos.d nach c wieder zurückgesaugt, sofern es nicht zu einem geringen Teil im Bereich des Auftragelementes 5 kapillar zurückgehalten und dieses fehlende Volumen durch eindringende Luft ersetzt wird.

Zusammenfassend ist festzustellen, daß das Auftragelement 5 von Pos.c nach d von einer Dosiermenge beaufschlagt wird, welche sich aus der Durchmesserdifferenz von Vor-u.Nachkolben 13 und 17 und dem Dosierhub H ergibt. Überlagert wird hierbei eine vor-u.rückpulsierende Flüssigkeitsmenge aus der Vor-u.Rückbewegung des Nachkolbens 17 in den Phasen c-d und d-c.
Dadurch wird das Auftragelement 5 zusätzlich umspült und für die in Pos.d erfolgende Applikation in vorteilhafter Weise benetzt.

### Rückschaltung in die Ausgangsposition a

### Phase d-c:

Vor-u.Nachkolben 13 und 17 befinden sich bei Pos.d in ihrer vorderen Endlage. Da der Nachkolben 17 mit der Betätigungsstange 23 einen in den Vorratsraum 2 wirkenden zweiten Stufenkolben in umgekehrter Orientierung bildet, herrscht in der Pos.d, ein maximaler Unterdruck im Vorratsraum 2, der sich aus der laufenden Volumen-Entnahme und aus der Wirkung des vorgenannten Stufenkolbens addiert. An der Dichtlippe 10.1 liegt in der Pos.d somit ein maximaler Unterdruck an der dem Vorratsraum 2 zugewanden Seite, während die andere Seite der Dichtlippe vom Umgebungsdruck beaufschlagt ist.
Dieses Druckgefälle an der Dichtung 10 bewirkt einen Atmungseffekt in der Dichtlippe 10.1, wodurch Ausgleichsluft in den Vorratsraum 2 einströmt, um ein Volumendefizit auszugleichen. Die Rückbewegung des Nachkolbens 17 in Richtung Pos.c, bewirkt ein Rücksaugen von Flüssigkeit aus der Bohrung 4 in die Dosierkammer 9. Sofern hierbei Flussigkeitspartikel kapillar im Bereich des Auftragelements 5 zurückgehalten werden, wird das fehlende Volumen durch Luftbläschen ergänzt, sodaß sich die Dosierkammer 9 in der Pos.c mit Flüssigkeit gefüllt hat, die mit geringen Luftanteilen versetzt ist.

Die mit dem Nachkolben 17 verbundene Stauscheibe 20 bewirkt beim Rücklauf von Pos. d nach c einen Sog im Bereich der Flanschbuchse 11, wodurch der vorgenannte Luftausgleich noch zusätzlich unterstützt wird.

### Phase c-b:

Beim Rückhub von Pos.c nach b liegen die Dichtlippen 7.1 und 10.1 an den zugeordneten Vor-u.Nachkolben 13 und 17 gleichzeitig und so lange an, bis der Dosierhub H rückwärts durchlaufen ist. Der Durchmesserunterschied von Vor-u.Nachkolben 13 und 17 und der Hub H ergeben eine Volumenzunahme in der Dosierkammer 9, die wegen der anliegenden Dichtlippen 7.1 und 10.1 nicht ausgeglichen werden kann und deshalb einen Unterdruck erzeugt, der seinen Maximalwert in der Pos.b annimmt.

### Phase b-a:

Verläßt die Steuerkante 18 des Nachkolbens 17 die Dichtlippe 10.1, so bewirkt der in der Dosierkammer 9 vorhandene Unterdruck, daß sich dieser durch eine Flüssigkeitsströmung aus dem Vorratsraum 2 ausgleicht.
Dieser Ausgleich wird dadurch unterstützt, daß der Nachkolben 17 in Verbindung mit der Betätigungsstange 23 ebenfalls einen Stufenkolben bildet, welcher beim Rücklauf von Pos. c nach b eine Drucksteigerung im Vorratsraum 2 hervorruft. Die Dosierkammer 9 ist nunmehr für einen neuen Dosiervorgang gefüllt.
Der durch die Bohrung 4 und das Auftragelement 5 gebildete, flüssigkeitsgefüllte Ringraum wird während des gesamten Rückhubes von Pos.d nach a, durch die Sogwirkung des Nachkolbens 17 (Pos.d-b) und des Vorkolbens (Pos.c-a) zurückgesaugt. Dadurch wird ein Nachtropfen vermieden, wenn der Auftragstift in seine Ausgangslage zurückgestellt ist.

## Patentansprüche

1. Auftragstift für Flüssigkeiten, die aus einem Vorratsraum (2) in dosierten Mengen mit Hilfe eines Betätigungselementes (27) einem Auftragelement (5) zugeführt werden, welches gemeinsam mit dem Betätigungselement (27) und einem Dosierkolben in Richtung der Längsachse bewegbar und in einer Bohrung (4) versenkbar ist, dadurch gekennzeichnet, daß zwischen der Bohrung (4) für ein Auftragelement (5) und dem Vorratsraum (2) eine Dosierkammer (9) mit an deren Stirnkanten angeordneten Dichtungen (7) und (10) vorgesehen ist, daß der Dosierkolben aus einem Vor- und einem Nachkolben (13, 17) besteht, denen jeweils eine Dichtlippe (7.1, 10.1) zugeordnet ist, und daß der Längsabstand der Dichtlippen (7.1) und (10.1) zueinander größer ist als der Abstand einer Steuerkante (15) am Vorkolben (13) zu einer Steuerkante (18) am Nachkolben (17), und daß der Verbindungsbereich (16) von Vorkolben (13) und Nachkolben (17) im Querschnitt kleiner ist als der Vorkolben (13) und der Nachkolben (17), wobei diese einen unterschiedlichen Querschnitt aufweisen.

2. Auftragstift nach Anspruch 1,
**dadurch gekennzeichnet,**
daß die Verbindung (16) vom Vorkolben (13) zum Nachkolben (17) aus zwei konischen Abschnitten (16.1) und (16.2) besteht.

3. Auftragstift nach Anspruch 1 und 2,
**dadurch gekennzeichnet,**
daß der konische Abschnitt (16.1), der sich an den Vorkolben (13) anschließt, die Form eines Kegelstumpfes aufweist, dessen Länge größer ist als die des konischen Abschnittes (16.2), der an den Nachkolben (17) angrenzt.

4. Auftragstift nach den Ansprüchen 1 bis 3,
**dadurch gekennzeichnet,**
daß die Dichtungen (7,10) in Axialrichtung verlaufende konische Dichtlippen (7.1) und (10.1) aufweisen deren Öffnungen jeweils dem Durchmesser des Vorkolbens (13) und des Nachkolbens (17) angepaßt sind und die sich konisch in Richtung zum Vorratsraum (2) verjüngen.

5. Auftragstift nach den Ansprüchen 1 bis 4,
**dadurch gekennzeichnet,**
daß am Ende des Nachkolbens (17) eine Stauscheibe (20) befestigt ist, an welcher sich die Druckfeder (19) abstützt und welche axiale Durchlässe (21) aufweist und welche an der Innenwandung des Gehäuses (1) geführt ist.

6. Auftragstift nach den Ansprüchen 1 bis 5,
**dadurch gekennzeichnet,**
daß sich der Nachkolben (17) zum Inneren des Vorratsraumes (2) in einem Schaft (22) und einer Betätigungsstange (23) fortsetzt, welche im Durchmesser reduziert ist.

7. Auftragstift nach Anspruch 6,
**dadurch gekennzeichnet,**
daß die Betätigungsstange (23) aus metallischem Werkstoff besteht.

## Claims

1. An application pen for liquids, which are supplied in metered amounts from a reservoir (2) to an application element (5) with the aid of an actuating element (27), which together with the actuating element (27) and a metering piston is movable in the direction of the longitudinal axis and is insertable into a bore (4), characterized in that between the bore (4) for an application element (5) and the reservoir (2) a metering chamber (9), having at its ends seals (7) and (10), is disposed, that the metering piston consists of a lower piston (13) and an upper piston (17), each of which is associated with a sealing lip (7.1, 10.1), and that the longitudinal distance of the sealing lips (7.1) and (10.1) from each other is greater than the distance of a control edge (15) on the lower piston (13) to a control edge (18) on the upper piston (17), and that the connection area (16) of the lower piston (13) and the upper piston (17) is smaller in diameter than the lower piston (13) and the upper piston (17), and that these have different diameters.

2. An application pen in accordance with claim 1, characterized in that the connection (16) from the lower piston (13) to the upper piston (17) consists of two conical sections (16.1) and (16.2).

3. An application pen in accordance with claims 1 and 2, characterized in that the conical section (16.1) which follows the lower piston (13) has the shape of a truncated cone, the length of which is greater than that of the conical section (16.2) which abuts the upper piston (17).

4. An application pen in accordance with claims 1 to 3, characterized in that the seals (7, 10) have conical sealing lips (7.1) and (10.1) extending in an axial direction, the openings of which are each adapted to the diameter of the lower piston (13) and the upper piston (17) and which conically taper in the direction towards the reservoir (2).

5. An application pen in accordance with claims 1 to 4, characterized in that a retarding disk (20) is fastened to the end of the upper piston (17), on which the pressure spring (19) is supported and which has axial openings (21) and which is guided on the inner wall of the housing (1).

6. An application pen in accordance with claims 1 to 5, characterized in that the upper piston (17) continues towards the interior of the reservoir (2) in the form of a shaft (22) and an actuating rod (23), which is reduced in diameter.

7. An application pen in accordance with claim 6, characterized in that the actuating rod (23) consists of a metallic material.

## Revendications

1. Stylo applicateur pour liquides, qui sont amenés, à partir d'une chambre de réserve (2), en quantités dosées, au moyen d'un élément d'actionnement (27), à un élément applicateur (5) qui est déplaçable dans la direction de l'axe longitudinal, en commun avec l'élément d'actionnement (27) et un piston de dosage, et qui peut être escamoté dans un alésage (4), caractérisé en ce qu'entre l'alésaqe (4) destiné à un élément applicateur (5) et la chambre de réserve (2), est prévue une chambre de dosage (9) comportant sur ses bords frontaux, des joints d'étanchéité (7) et (10), en ce que le piston de dosage est constitué d'un piston avant et d'un piston arrière (13, 17) à chacun desquels est associée respectivement une lèvre d'étanchéité (7.1, 10.1), en ce que la distance longitudinale entre les lèvres d'étanchéité (7.1) et (10.1) est supérieure à la distance entre une arête de commande (15) sur le piston avant (13) et une arête de commande (18) sur le piston arrière (17), et en ce que la zone de liaison (16) entre le piston avant (13) et le piston arrière (17) est plus petite, en section transversale, que le piston avant (13) et que le piston arrière (17), ceux-ci présentant une section transversale différente.

2. Stylo applicateur selon la revendication 1, caractérisé en ce que la liaison (16) du piston avant (13) au piston arrière (17) est réalisée par deux tronçons coniques (16.1) et (16.2).

3. Stylo applicateur selon les revendications 1 et 2, caractérisé en ce que le tronçon conique (16.1) qui se raccorde au piston avant (13) présente une forme de tronc de cône, dont la longueur est supérieure à celle du tronçon conique (16.2) qui est adjacent au piston arrière (17).

4. Stylo applicateur selon les revendications 1 à 3, caractérisé en ce que les joints d'étanchéité (7, 10) comportent des lèvres d'étanchéité coniques (7.1) et (10.1) qui s'étendent dans la direction axiale, dont les ouvertures sont adaptées respectivement au diamètre du piston avant (13) et au diamètre du piston arrière (17), et qui se rétrécissent de manière conique en direction de la chambre de réserve (2).

5. Stylo applicateur selon les revendications 1 à 4, caractérisé en ce qu'à l'extrémité du piston arrière (17), est fixé un disque de refoulement (20) sur lequel s'appuie le ressort de compression (19), le disque de refoulement comportant des orifices de passage (21) de direction axiale, et étant guidé sur la paroi intérieure du carter (1).

6. Stylo applicateur selon les revendications 1 à 5, caractérisé en ce que le piston arrière (17) se poursuit, en direction de l'intérieur de la chambre de réserve (2), par un embout (22) et une tige d'actionnement (23) qui est réduite en diamètre.

7. Stylo applicateur selon la revendication 6, caractérisé en ce que la tige d'actionnement (23) est réalisée en un matériau métallique.
